# FASCICULE DE BREVET EUROPEEN

(11) **EP 3 381 338 B1**
(45) Date de publication et mention de la délivrance du brevet: **23.11.2022**
(21) Numéro de dépôt: 18163786.9
(22) Date de dépôt: 23.03.2018
(51) Int. Cl.: A47J 37/04, A47J 37/06

(54) **APPAREIL DE CUISSON PAR FLUX CHAUFFANT AVEC MOYEN DE REMUAGE**
GERÄT ZUM KOCHEN MITHILFE VON HEISSLUFTSTROM MIT RÜHRMITTEL
APPLIANCE FOR COOKING BY A HEATING STREAM WITH STIRRING MEANS

(30) Priorité: 27.03.2017 FR 1752538
(43) Date de publication de la demande: 03.10.2018
(73) Titulaire: SEB S.A., 69130 Ecully (FR)
(72) Inventeur: DELRUE, Olivier, 21260 SELONGEY (FR); SEURAT, Frédéric, 21490 BRETIGNY (FR); PETITALLOT, Johann, 21000 DIJON (FR); BIZARD, Jean-Claude, 21121 FONTAINE LES DIJON (FR); LORDONNOIS, Rodolphe, 21000 DIJON (FR); CORNU, Jérémy, 21000 DIJON (FR)
(74) Mandataire: SEB Développement

(56) Documents cités:
- CN-U- 205 697 284
- FR-A1- 2 871 042
- FR-A1- 3 029 096
- US-A1- 2015 292 750

## Description

La présente invention concerne le domaine des appareils électriques de cuisson comportant un moyen de remuage agencé dans un moyen de réception d'aliments.

Le document FR2871042 décrit un appareil de cuisson par flux d'air comprenant des moyens de remuage. L'appareil comprend un récipient dans lequel les aliments sont cuits. Le flux d'air chaud est généré par un ventilateur centrifuge qui aspire l'air dans l'enceinte de cuisson et le refoule sur des éléments chauffants. L'air chauffé est ensuite acheminé au-dessus du récipient par l'intermédiaire d'un conduit formant tuyère. Même si l'appareil décrit dans ce document donne des résultats de cuisson satisfaisants, celui-ci est bruyant et volum ineux.

Le document CN205 697 284 U divulgue un ventilateur à flux transversal. Cependant, le positionnement des éléments chauffants n'est pas optimisé et augmente l'encombrement de l'appareil de cuisson.

Un objet de la présente invention est de proposer un appareil de cuisson par flux chauffant et moyen de remuage plus compact et plus silencieux. Un autre objet de la présente invention consiste à augmenter l'efficacité du moyen de chauffe.

Ces objets sont atteints avec un appareil de cuisson comprenant un boitier comprenant un premier compartiment formant un espace de cuisson, pourvu d'un moyen de réception prévu pour recevoir des ingrédients, un moyen de remuage disposé au sein du moyen de réception, le moyen de réception et le moyen de remuage étant conçus pour être animés d'un mouvement relatif de rotation l'un par rapport à l'autre, le boitier comprend un moyen de chauffe principal, comprenant, dans un deuxième compartiment, des moyens de ventilation pour générer un flux chauffant, caractérisé en ce que les moyens de ventilation comprennent un ventilateur à flux transversal, le moyen de chauffe principal comprend au moins un élément chauffant agencé dans le premier compartiment.

L'utilisation d'un ventilateur à flux transversal permet tout d'abord de réduire le bruit de l'appareil en utilisation. Le positionnement des moyens de chauffage dans le premier compartiment permet de réduire l'encombrement, notamment la longueur de l'appareil. De plus, l'utilisation d'un ventilateur à flux transversal permet d'avoir un flux linéaire et non perturbé qui provoque un refroidissement homogène de l'élément chauffant. Ainsi, un élément chauffant du type filament enroulé autour de mica, ne présentera plus de points rouges sur le filament lors du chauffage. Cela permet également un bobinage régulier du fil sur le mica.

Enfin, il est rappelé que la combinaison du positionnement du ventilateur à flux transversal et de l'au moins un élément chauffant est déterminante pour l'atteinte des performances de cuisson. Cela implique un travail sur le flux d'air, la géométrie et le dimensionnement du ventilateur à flux transversal mais également de l'au moins un élément chauffant.

Selon un autre mode de réalisation, le deuxième compartiment comprend une zone d'admission en amont du ventilateur à flux transversal, agencée entre l'espace de cuisson et les moyens de ventilation, et en communication avec les moyens de ventilation.

Selon un autre mode de réalisation, la hauteur de la zone d'admission est au moins égale au diamètre du ventilateur à flux transversal.

Selon un autre mode de réalisation, la largeur de la zone d'admission est au moins égale à 1,5 fois le diamètre du ventilateur à flux transversal.

Selon un autre mode de réalisation, la distance entre l'axe du ventilateur à flux transversal et un bord extérieur du boitier est au moins égale à 0,7 fois le diamètre du ventilateur à flux transversal.

Selon un autre mode de réalisation, le moyen de chauffe principal comprend une tuyère pour guider le flux chauffant vers le moyen de réception, la tuyère débouchant dans le premier compartiment.

Selon un autre mode de réalisation, l'au moins un élément chauffant est agencé dans la tuyère.

Selon un autre mode de réalisation, la distance entre la périphérie du ventilateur à flux transversal et l'extrémité adjacente de la tuyère est au moins égale à 0.3 fois le diamètre du ventilateur à flux transversal.

Selon un autre mode de réalisation, le boitier comprend un couvercle monté de façon pivotante et recouvrant les premier et deuxième compartiments, l'axe de pivotement étant positionné entre le deuxième compartiment et le bord extérieur du boitier.

Selon un autre mode de réalisation, la tuyère est solidaire du couvercle et les moyens de ventilation sont fixes dans le deuxième compartiment.

Selon un autre mode de réalisation, la tuyère est solidaire des moyens de ventilation et les moyens de ventilation pivotent dans le même sens que le couvercle, l'axe de pivotement des moyens de ventilation étant positionné entre le premier compartiment et le deuxième compartiment.

Selon un autre mode de réalisation, le boitier comprend un couvercle monté de façon pivotante et recouvrant au moins le premier compartiment, l'axe de pivotement étant positionné entre le premier compartiment et le deuxième compartiment.

Selon un autre mode de réalisation, le couvercle recouvre uniquement le premier compartiment et les moyens de ventilation sont fixes dans le deuxième compartiment.

Selon un autre mode de réalisation, le couvercle recouvre le premier et le deuxième compartiments, les moyens de ventilation pivotent dans le même sens que le couvercle, l'axe de pivotement des moyens de ventilation étant confondu avec l'axe de pivotement du couvercle.

D'autres avantages et particularités de la présente invention apparaîtront dans la description des modes de réalisation donnés à titre d'exemple non limitatif et illustrés par les dessins mis en annexe où :
- la figure 1 est une vue en coupe longitudinale d'un premier exemple de réalisation d'un appareil de cuisson selon l'invention ;
- la figure 2 est une vue en coupe longitudinale du premier exemple de réalisation de l'appareil de cuisson avec le couvercle en position d'ouverture ;
- la figure 3 est une vue en coupe longitudinale d'un deuxième exemple de réalisation de l'appareil de cuisson avec le couvercle en position d'ouverture ;
- la figure 4 une vue en coupe longitudinale d'un troisième exemple de réalisation de l'appareil de cuisson avec le couvercle en position d'ouverture ;

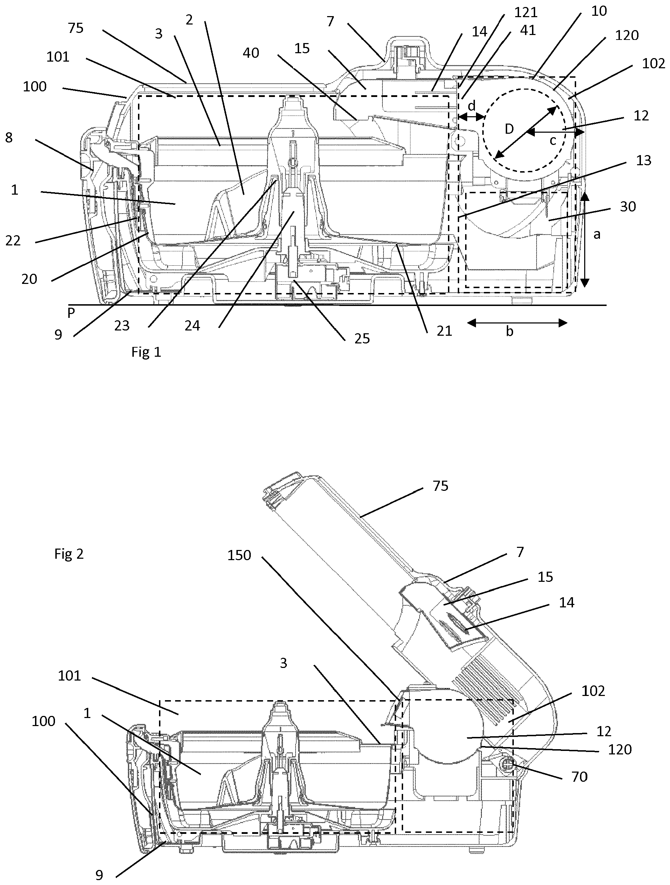

L'appareil de cuisson représenté à la figure 1 comprend un boitier 100 composé d'un premier compartiment 101 et d'un deuxième compartiment 102. Le premier compartiment 101 correspond sensiblement à la zone de cuisson de l'appareil selon l'invention. Le premier compartiment 101 comprend un moyen de réception 1 ou récipient prévu pour recevoir les ingrédients et un moyen de remuage 2 disposé au sein du moyen de réception 1. Le moyen de réception 1 présente une ouverture supérieure 3. Le moyen de réception 1 et le moyen de remuage 2 sont conçus pour être animés d'un mouvement relatif de rotation l'un par rapport à l'autre. Ce mouvement est assuré par un moteur 25 placé sous le récipient.

L'appareil de cuisson comporte au moins un moyen de chauffe principal 10. Tel que représenté sur la figure 1, le moyen de chauffe principal 10 génère un flux chauffant entrant dans le moyen de réception 1 par l'ouverture supérieure 3.

Plus particulièrement, le moyen de réception 1 est formé par une cuve 20 comportant un fond 21 et une paroi latérale 22. Selon la variante de réalisation de la figure 1, le fond 21 est incliné vers le bas en direction de la paroi latérale 22. La cuve 20 présente une ouverture centrale 23 prévue pour le passage d'un axe d'entraînement 24 entraîné en rotation par un moteur 25. Le moyen de remuage 2 est monté sur l'axe d'entraînement 24. La cuve 20 est avantageusement réalisée en matériau métallique, de préférence en matériau métallique revêtu ou en acier inoxydable. Le moyen de réception 1 comporte une poignée 8. Le moyen de réception 1 est monté amovible par rapport au boîtier 100. Selon l'invention, le moyen de chauffe principal 10 comprend un ventilateur 12 à flux transversal monté dans le deuxième compartiment 102 du boitier 100. Le ventilateur 12 est par exemple monté dans un caisson 120. L'axe du ventilateur 12 à flux transversal est sensiblement parallèle au plan P de travail.

Le ventilateur 12 est prévu pour aspirer l'air présent dans le premier compartiment 101 par une admission d'air 13 et pour propulser l'air sur un élément chauffant 14 agencé dans une tuyère 15. La tuyère 15 débouche dans le premier compartiment 101 au niveau d'une sortie 40. La sortie 40 de la tuyère 15 est positionnée au-dessus du moyen de réception 1. Une autre extrémité 41 de la tuyère est adjacente à un orifice de sortie 121 du caisson 120.

Selon l'invention, l'élément chauffant 14 est positionné dans le premier compartiment 101. Cette configuration particulière permet de réduire la taille de l'appareil de cuisson selon l'invention.

L'élément chauffant 14 est, par exemple, constitué d'un fil résistif enroulé autour d'un support en mica ajouré inséré dans un corps métallique. La densité d'enroulement du fil est ajustée pour limiter les pertes de charge et la formation de points rouges lors du fonctionnement. Selon une variante de réalisation, l'élément chauffant 14 peut comprendre 2 supports en mica ajouré.

Selon une variante de réalisation, la tuyère 15 est également positionnée dans le premier compartiment 101.

Le deuxième compartiment 102 comprend une zone d'admission 30 située en amont du ventilateur 12 à flux transversal. Cette zone d'admission 30 est destinée à réduire les pertes de charge en amont du ventilateur 12 à flux transversal. La zone d'admission 30 est en liaison aéraulique avec le premier compartiment 101 au travers de l'admission d'air 13.

Les dimensions préférées de la zone d'admission 30 sont les suivantes :
- La hauteur a doit être au moins égal au diamètre D du ventilateur 12 à flux transversal
- La largeur b doit être au moins égal à 1,5 fois le diamètre D du ventilateur 12 à flux transversal
- la distance c entre l'axe du ventilateur 12 à flux transversal et un bord extérieur du boitier 100 doit être au moins égale à 0,7 fois le diamètre D du ventilateur 12 à flux transversal
- La distance d entre la périphérie du ventilateur 12 à flux transversal et l'orifice de sortie du caisson 120 doit être au moins égale à 0,3 fois le diamètre D du ventilateur 12 à flux transversal.

Le boitier 100 de l'appareil selon l'invention comprend également un couvercle 7 et une embase 9. Le couvercle 7 est destiné à couvrir au moins le premier compartiment 101. Le couvercle 7 peut comprendre un hublot 75 transparent positionné au-dessus du premier compartiment 101 pour permettre à l'utilisateur de suivre l'avancement de la cuisson.

Selon la variante de réalisation de la figure 2, le couvercle 7 est conformé pour couvrir à la fois le premier compartiment 101 et le deuxième compartiment 102. Le couvercle 7 est monté sur l'embase 9 selon un axe 70 de pivotement. Selon cette variante L'axe 70 de pivotement est situé dans le deuxième compartiment 102 le plus éloigné possible du premier compartiment 101. A titre d'exemple, l'axe de pivotement 70 est situé à proximité du bord extérieur du boitier 1.

Cette configuration laisse un large accès au premier compartiment 101 ce qui facilite l'introduction et le retrait du récipient 1 lors de la préparation des aliments.

Afin d'augmenter encore l'accessibilité au premier compartiment 101, la tuyère 15 est montée sur la face interne du couvercle 7. Un joint d'étanchéité 150 peut être prévu sur l'extrémité de la tuyère 15 d'éviter les fuites d'air chaud entre la tuyère 15 et le caisson 120 du ventilateur 12 à flux transversal. Dans cette variante de réalisation, lorsque que le couvercle 7 est en position ouverte, l'intégralité de l'ouverture supérieure 3 du récipient 1 est accessible. L'introduction d'aliment est donc facilitée.

Selon cette variante de réalisation, le ventilateur 12 est fixe par rapport au boitier 100.

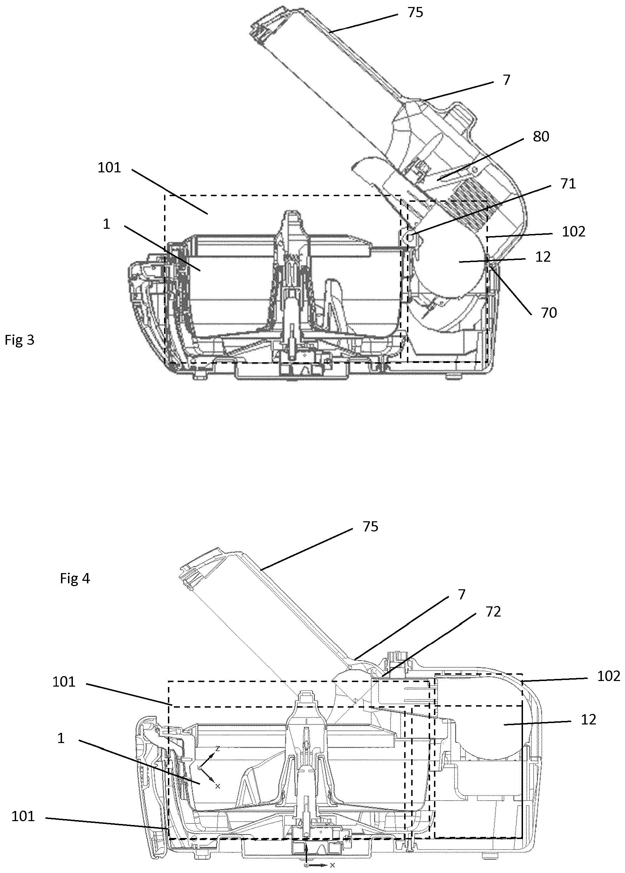

La variante de réalisation présentée à la figure 3, est identique en tout point à la variante de réalisation de la figure 2 à l'exception du fait que le ventilateur 12 est également monté pivotant par rapport au boitier 100. Le sens du pivotement du ventilateur 12 est identique à celui du couvercle 7. L'axe de pivotement 71 du ventilateur est situé entre le premier compartiment 101 et le deuxième compartiment 102, par exemple au niveau du bord supérieur du récipient 1. Pour assurer la synchronisation du mouvement du couvercle 7 et du ventilateur, une bielle 80 lie le couvercle 7 et le ventilateur 12. Selon la variante de réalisation, la bielle 80 est par exemple fixée sur la tuyère 15 elle-même solidaire du caisson 120 du ventilateur.

Selon une autre variante de réalisation non représentée, l'axe de pivotement du couvercle est confondu avec l'axe de pivotement du ventilateur. Cet axe est par exemple situé entre le premier et le deuxième compartiment du boitier.

Selon la variante de réalisation de la figure 4, le couvercle 7 est conformé pour couvrir uniquement le premier compartiment 101. Le couvercle 7 est monté sur l'embase 9 selon un axe 72 de pivotement. Selon cette variante l'axe 72 de pivotement est situé entre le premier compartiment 101 et le deuxième compartiment 102 dans une zone située au-dessus de l'ouverture supérieure 3 du récipient 1.

A titre de variante, le moyen de réception 1 n'est pas nécessairement formé par une cuve. Le moyen de réception présente de préférence un fond et une paroi latérale. Le moyen de réception peut notamment être formé par un panier ajouré.

La présente invention n'est nullement limitée aux modes de réalisation décrits, mais englobe de nombreuses modifications dans le cadre des revendications.

## Revendications

1. Appareil de cuisson comprenant un boitier (100) comprenant un premier compartiment (101) formant un espace de cuisson, pourvu d'un moyen de réception (1) prévu pour recevoir des ingrédients, un moyen de remuage (2) disposé au sein du moyen de réception (1), le moyen de réception (1) et le moyen de remuage (2) étant conçus pour être animés d'un mouvement relatif de rotation l'un par rapport à l'autre, le boitier comprend un moyen de chauffe principal (10), comprenant, dans un deuxième compartiment (102), des moyens de ventilation (12) pour générer un flux chauffant, **caractérisé en ce que** les moyens de ventilation comprennent un ventilateur à flux transversal (12), le moyen de chauffe principal (10) comprend au moins un élément chauffant (14) agencé dans le premier compartiment (101).

2. Appareil de cuisson selon la revendication précédente dans lequel le deuxième compartiment (102) comprend une zone d'admission (30) en amont du ventilateur à flux transversal (12), agencée entre l'espace de cuisson et les moyens de ventilation (12), et en communication avec les moyens de ventilation (12).

3. Appareil de cuisson selon la revendication précédente dans lequel la hauteur (a) de la zone d'admission (30) est au moins égale au diamètre (D) du ventilateur (12) à flux transversal.

4. Appareil de cuisson selon l'une des revendications 2 ou 3 dans lequel la largeur (b) de la zone d'admission (30) est au moins égale à 1,5 fois le diamètre (D) du ventilateur (12) à flux transversal.

5. Appareil de cuisson selon l'une des revendications 2 à 4 dans lequel la distance (c) entre l'axe du ventilateur à flux transversal et un bord extérieur du boitier (100) est au moins égale à 0,7 fois le diamètre (D) du ventilateur à flux transversal (12).

6. Appareil de cuisson selon l'une des revendications précédentes dans lequel le moyen de chauffe principal (10) comprend une tuyère (15) pour guider le flux chauffant vers le moyen de réception (1), la tuyère (15) débouchant dans le premier compartiment (101).

7. Appareil de cuisson selon la revendication précédente dans lequel l'au moins un élément chauffant (14) est agencé dans la tuyère (15).

8. Appareil de cuisson selon l'une des revendications 6 ou 7 dans lequel la distance (d) entre la périphérie du ventilateur (12) à flux transversal et l'extrémité (121) adjacente de la tuyère (15) est au moins égale à 0.3 fois le diamètre (D) du ventilateur (12) à flux transversal.

9. Appareil de cuisson selon l'une des revendications précédentes dans lequel le boitier (100) comprend un couvercle (7) monté de façon pivotante et recouvrant les premier et deuxième compartiments (101, 102), l'axe de (70) pivotement étant positionné entre le deuxième compartiment (102) et le bord extérieur du boitier (100).

10. Appareil de cuisson selon la revendication précédente dans lequel la tuyère (15) est solidaire du couvercle (7) et les moyens de ventilation (12) sont fixes dans le deuxième compartiment (102).

11. Appareil de cuisson selon la revendication 9 dans lequel la tuyère (15) est solidaire des moyens de ventilation (12) et les moyens de ventilation (12) pivotent dans le même sens que le couvercle (7), l'axe de pivotement (71) des moyens de ventilation (12) étant positionné entre le premier compartiment (101) et le deuxième compartiment (102).

12. Appareil de cuisson selon l'une des revendications 1 à 8 dans lequel le boitier (100) comprend un couvercle (7) monté de façon pivotante et recouvrant au moins le premier compartiment (101), l'axe de pivotement (71) étant positionné entre le premier compartiment (101) et le deuxième compartiment (102).

13. Appareil de cuisson selon la revendication précédente dans lequel le couvercle (7) recouvre uniquement le premier compartiment (101) et les moyens de ventilation (12) sont fixes dans le deuxième compartiment (102).

14. Appareil de cuisson selon l'une des revendications 1 à 8 dans lequel le couvercle (7) recouvre le premier et le deuxième compartiments (101, 102), les moyens de ventilation (12) pivotent dans le même sens que le couvercle (7), l'axe de pivotement des moyens de ventilation (12) étant confondu avec l'axe de pivotement du couvercle (7).

## Patentansprüche

1. Kochgerät, umfassend ein Gehäuse (100), das ein erstes Fach (101) umfasst, das einen Kochraum bildet, versehen mit einem Aufnahmemittel (1), das zum Aufnehmen von Zutaten vorgesehen ist, einem Rührmittel (2), das innerhalb des Aufnahmemittels (1) angeordnet ist, wobei das Aufnahmemittel (1) und das Rührmittel (2) dazu ausgelegt sind, in eine relative Drehbewegung zueinander versetzt zu werden, das Gehäuse ein Hauptheizmittel (10) umfasst, das, in einem zweiten Fach (102), Belüftungsmittel (12) zum Erzeugen eines Heizstroms umfasst, **dadurch gekennzeichnet, dass** die Belüftungsmittel einen Querstromventilator (12) umfasst, das Hauptheizmittel (10) mindestens ein Heizelement (14) umfasst, das in dem ersten Fach (101) angeordnet ist.

2. Kochgerät nach dem vorstehenden Anspruch, wobei das zweite Fach (102) eine Einlasszone (30) stromaufwärts des Querstromventilators (12) umfasst, die zwischen dem Kochraum und den Belüftungsmitteln (12) angeordnet ist und mit den Belüftungsmitteln (12) in Verbindung steht.

3. Kochgerät nach dem vorstehenden Anspruch, wobei die Höhe (a) der Einlasszone (30) mindestens gleich dem Durchmesser (D) des Querstromventilators (12) ist.

4. Kochgerät nach einem der Ansprüche 2 oder 3, wobei die Breite (b) der Einlasszone (30) mindestens das 1,5-fache des Durchmessers (D) des Querstromventilators (12) beträgt.

5. Kochgerät nach einem der Ansprüche 2 bis 4, wobei der Abstand (c) zwischen der Achse des Querstromventilators und einer Außenkante des Gehäuses (100) mindestens das 0,7-fache des Durchmessers (D) des Querstromventilators (12) beträgt.

6. Kochgerät nach einem der vorstehenden Ansprüche, wobei das Hauptheizmittel (10) eine Düse (15) umfasst, um den Heizstrom zu dem Aufnahmemittel (1) zu leiten, wobei die Düse (15) in das erste Fach (101) mündet.

7. Kochgerät nach dem vorstehenden Anspruch, wobei das mindestens eine Heizelement (14) in der Düse (15) angeordnet ist.

8. Kochgerät nach einem der Ansprüche 6 oder 7, wobei der Abstand (d) zwischen dem Umfang des Querstromventilators (12) und dem angrenzenden Ende (121) der Düse (15) mindestens das 0,3-fache des Durchmessers (D) des Querstromventilators (12) beträgt.

9. Kochgerät nach einem der vorstehenden Ansprüche, wobei das Gehäuse (100) einen Deckel (7) umfasst, der schwenkbar angebracht ist und das erste und zweite Fach (101, 102) abdeckt, wobei die Schwenkachse (70) zwischen dem zweiten Fach (102) und der Außenkante des Gehäuses (100) positioniert ist.

10. Kochgerät nach dem vorstehenden Anspruch, wobei die Düse (15) fest mit dem Deckel (7) verbunden ist und die Belüftungsmittel (12) fest im zweiten Fach (102) angeordnet sind.

11. Kochgerät nach Anspruch 9, wobei die Düse (15) fest mit den Belüftungsmitteln (12) verbunden ist und die Belüftungsmittel (12) in der gleichen Richtung wie der Deckel (7) schwenken, wobei die Schwenkachse (71) der Belüftungsmittel (12) zwischen dem ersten Fach (101) und dem zweiten Fach (102) positioniert ist.

12. Kochgerät nach einem der Ansprüche 1 bis 8, wobei das Gehäuse (100) einen Deckel (7) umfasst, der schwenkbar angebracht ist und zumindest das erste Fach (101) abdeckt, wobei die Schwenkachse (71) zwischen dem ersten Fach (101) und dem zweiten Fach (102) positioniert ist.

13. Kochgerät nach dem vorstehenden Anspruch, wobei der Deckel (7) nur das erste Fach (101) abdeckt und die Belüftungsmittel (12) im zweiten Fach (102) fest angeordnet sind.

14. Kochgerät nach einem der Ansprüche 1 bis 8, wobei der Deckel (7) das erste und das zweite Fach (101, 102) abdeckt, die Belüftungsmittel (12) in die gleiche Richtung wie der Deckel (7) schwenken, wobei die Schwenkachse der Belüftungsmittel (12) mit der Schwenkachse des Deckels (7) zusammenfällt.

## Claims

1. Cooking appliance comprising a casing (100) comprising a first compartment (101) forming a cooking space, provided with a receiving means (1), provided for receiving ingredients, a stirring means (2) disposed within the receiving means (1), the receiving means (1) and the stirring means (2) being designed to be moved by a relative rotation movement against one another, the casing comprises a main heating means (10), comprising, in a second compartment (102), ventilation means (12) for generating a heating stream, **characterised in that** the ventilation means comprise a transverse stream ventilator (12), the main heating means (10) comprises at least one heating element (14) arranged in the first compartment (101).

2. Cooking appliance according to the preceding claim, wherein the second compartment (102) comprises an inlet zone (30) upstream from the transverse stream ventilator (12), arranged between the cooking space and the ventilation means (12), and in communication with the ventilation means (12).

3. Cooking appliance according to the preceding claim, wherein the height (a) of the inlet zone (30) is at least equal to the diameter (D) of the transverse stream ventilator (12).

4. Cooking appliance according to one of claims 2 or 3, wherein the width (b) of the inlet zone (30) is at least equal to 1.5 times the diameter (D) of the transverse stream ventilator (12).

5. Cooking appliance according to one of claims 2 to 4, wherein the distance (c) between the axis of the transverse stream ventilator and an outer edge of the casing (100) is at least equal to 0.7 times the diameter (D) of the transverse stream ventilator (12).

6. Cooking appliance according to one of the preceding claims, wherein the main heating means (10) comprises a pipe (15) for guiding the heating stream towards the receiving means (1), the pipe (15) leading to the first compartment (101).

7. Cooking appliance according to the preceding claim, wherein the at least one heating element (14) is arranged in the pipe (15).

8. Cooking appliance according to one of claims 6 or 7, wherein the distance (d) between the periphery of the transverse stream ventilator (12) and the adjacent end (121) of the pipe (15) is at least equal to 0.3 times the diameter (D) of the transverse stream ventilator (12).

9. Cooking appliance according to one of the preceding claims, wherein the casing (100) comprises a cover (7) pivotingly mounted and covering the first and second compartments (101, 102), the pivot axis (70) being positioned between the second compartment (102) and the outer edge of the casing (100).

10. Cooking appliance according to the preceding claim, wherein the pipe (15) is integral with the cover (7) and the ventilation means (12) are fixed in the second compartment (102).

11. Cooking appliance according to claim 9, wherein the pipe (15) is integral with the ventilation means (12) and the ventilation means (12) pivot in the same direction as the cover (7), the pivot axis (71) of the ventilation means (12) being positioned between the first compartment (101) and the second compartment (102).

12. Cooking appliance according to one of claims 1 to 8, wherein the casing (100) comprises a cover (7) pivotingly mounted and covering at least the first compartment (101), the pivot axis (71) being positioned between the first compartment (101) and the second compartment (102).

13. Cooking appliance according to the preceding claim, wherein the cover (7) only covers the first compartment (101) and the ventilation means (12) are fixed in the second compartment (102).

14. Cooking appliance according to one of claims 1 to 8, wherein the cover (7) covers the first and the second compartments (101, 102), the ventilation means (12) pivot in the same direction as the cover (7), the pivot axis of the ventilation means (12) being combined with the pivot axis of the cover (7).
